Europäisches Patentamt

(19) European Patent Office

Office européen des brevets

(11) Veröffentlichungsnummer: **0 192 026**
A1

(12) # EUROPÄISCHE PATENTANMELDUNG

(21) Anmeldenummer: 86100210.3

(22) Anmeldetag: 09.01.86

(51) Int. Cl.⁴: **G 09 B 29/10**
G 03 B 21/30

(30) Priorität: 18.01.85 DE 3501531

(43) Veröffentlichungstag der Anmeldung:
27.08.86 Patentblatt 86/35

(84) Benannte Vertragsstaaten:
AT CH FR GB IT LI NL SE

(71) Anmelder: Bengel, Brigitte
Haldenstrasse 53
D-7148 Remseck 3(DE)

(72) Erfinder: Bengel, Friedrich
Haldenstrasse 53
D-7148 Remseck 3(DE)

(74) Vertreter: Dreiss, Uwe, Dr. jur. Dipl.-Ing. M.Sc. et al,
Patentanwälte Dreiss, Hosenthien & Fuhlendorf
Gerokstrasse 6
D-7000 Stuttgart 1(DE)

(54) Lesegerät für mikroverfilmte Informationsträger.

(57) Lesegerät für mikroverfilmte Informationsträger insbesondere zur Anordnung am Armaturenbrett von Kraftfahrzeugen, bestehend aus einem Gehäuse, einem Bildschirm, einer Lichtquelle und einer Objektivvorrichtung, bei dem die Größe der Bildschirmfläche veränderbar ist.

FIG.2

Beschreibung **0192026**

Die Erfindung betrifft ein Lesegerät für mikroverfilmte Informationsträger, insbesondere zur Anordnung
am Armaturenbrett eines Kraftfahrzeuges, mit einer
Führung für den Informationsträger, mit einem
aus einem Unterteil und einem daran schwenkbar angelenktem
Oberteil bestehenden Gehäuse und einem mehrteiligen
Bildschirm, der bei hochgeschwenktem Vorderteil eine
von einer Projektionseinrichtung insgesamt erfaßte und
betrachtbare Projektionsfläche bildet.

Ein Lesegerät ist aus dem GM 77 09 639 bekannt. Es
handelt sich dabei um ein Koffergerät, bei dem der als
Projektionsfläche dienende Bildschirm mehrteilig ausgebildet und zum raumsparenden Transport zusammenklappbar
ist. Der Bildschirm weist dabei zwei durch Scharniere
angelenkte Seitenteile auf, die nach der Seite hin weggeklappt werden können. Zum Transport werden sie auf die
Deckelinnenseite zurückgelegt. Dabei werden auch die
Umlenkspiegel, d.h. Teile der Projektionseinrichtung umgelegt. Daraufhin wird der Deckel geschlossen. Beim
Gebrauch des Lesegeräts gibt es also nur eine einzige
Position des Bildschirms (vgl. Bezugszeichen 23, 25, 26),
in der er betrachtet werden kann. Dabei dient die

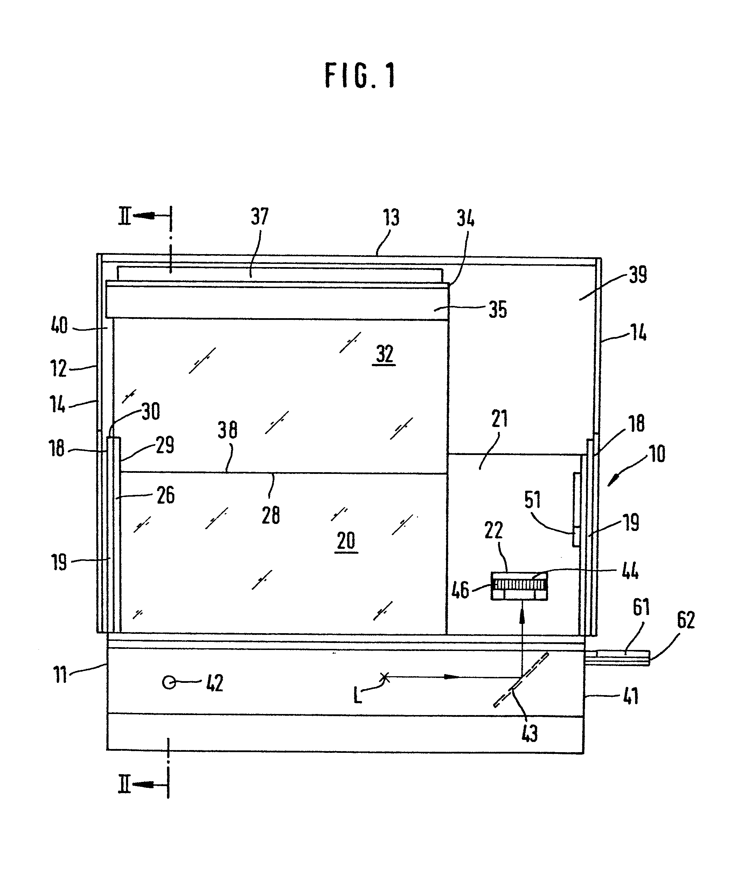

<u>Gesamtheit</u> des mehrteiligen Bildschirms als Projektionsfläche. Es kommt also nur eine <u>einzige</u> Bildschirmgröße,
nämlich gemäß Figur 1, als Projektionsfläche in Betracht.
Im zusammengeklappten Zustand kann der Bildschirm zwar
raumsparend transportiert werden, weil die Seitenteile
dann aufeinander aufliegen, die dann gegebene, reduzierte
Bildschirmfläche ist jedoch nicht mehr als Projektionsfläche verwendbar.

Der Nachteil eines derartigen Lesegerätes als Führungsmittel beim Autofahren, also bei Anordnung am Armaturenbrett, besteht darin, daß nur <u>eine</u> Projektionsfläche
<u>einer</u> bestimmten Größe zur Verfügung steht. Bei dem
Wunsch nach Darstellung eines größeren Landkartenausschnitts auf der Projektionsfläche muß also entweder
der Maßstab verkleinert werden; damit sinkt die Erkennbarkeit der Details, oder man verstellt dauernd den Landkartenausschnitt. Beides ist in der Handhabung umständlich
und erfordert einen hohen apparativen Aufwand.

Zum Beispiel ist aus der DE-OS 30 43 758 ein Lesegerät
für Film-Landkarten bekannt, das zum Einbau in Kraftfahrzeuge bestimmt ist. Es ist im Blickfeld des Kraftfahrers
im Bereich des Armaturenbrettes oder zwischen den Vordersitzen angeordnet. Es besteht aus einem Gehäuse mit
Bildschirm, einer verschiebbaren Halterung für den Rahmen der Film-Landkarte, einer Verschiebevorrichtung für die Halterung und für das Objektiv, sowie einer Beleuchtungsquelle. Die auf Mikrofilm aufgebrachten Landkarten werden mittels der verschiebbaren Halterung in das Lesegerät eingebracht und auf den Bildschirm projeziert. Durch Vorsatzlinsen, die in den Strahlengang eingeschoben werden, oder durch Objektivwechselvorrichtungen kann eine Vergrößerung des projezierten Bildes erreicht werden. Den Ausmaßen solcher Lesegeräte und somit der Bildschirmfläche sind sehr enge Grenzen gesetzt. Das Gerät muß einerseits von dem Fahrer gut eingesehen werden können, andererseits darf es aus verkehrstechnischen Gründen die Sicht des Fahrers nicht behindern, ferner soll der Platz des Beifahrers nicht beeinträchtigt werden.

Derartige Lesegeräte haben den Nachteil, daß die Details sehr schwierig zu erkennen sind. Bei vergrößerten Aufnahmen kann nur ein unübersichtlich geringer Bereich überschaut werden. Es ist daher ein häufiges Nachstellen des Kartenausschnittes notwendig. Die z.B. durch eine Vergrößerung zusätzlich gewonnene Information erfolgt auf Kosten der Übersichtlichkeit durch eine Einschränkung des einzusehenden Bereiches.

Demgegenüber ist es Aufgabe der Erfindung, ein Gerät der genannten Art derart weiterzubilden, daß bei kleinen baulichen Abmessungen, die zur Anordnung auf dem Armaturenbrett eines Kraftfahrzeuges geeignet sind, eine Verstellung der Größe des Bildschirms derart möglich ist, daß dem Betrachter bei Betrachtung der Karte wahlweise verschiedene Größen der Projektionsfläche zur Verfügung stehen.

Diese Aufgabe wird nach dem Kennzeichen des Anspruches 1 dadurch gelöst, daß bei herabgeschwenktem Oberteil ein Teil des gesamten Bildschirms - das ist in Fig. 1 der am Unterteil 11 angeordnete Bildschirm 20 - als von der Projektionseinrichtung unverändert erfaßte betrachtbare Projektionsfläche verbleibt.

Wesentlicher Unterschied gegenüber dem eingangs genannten GM 77 09 639 ist also, daß in beiden Positionen, also sowohl bei heruntergeschwenktem Oberteil als auch bei hochgeklapptem Oberteil, je eine bestimmte Fläche als Projektionsfläche zur Verfügung steht. Es ist einmal nur ein Teil des gesamten mehrteiligen Bildschirms, im andern Fall der gesamte mehrteilige Bildschirm. Dagegen ist bei dem Stande der Technik im heruntergeschwenkten Zustand keine Betrachtung mehr möglich.

Bei der Erfindung bleibt die Projektionseinrichtung trotz Herunterschwenken des Oberteils intakt. Dadurch unterscheidet sich die Erfindung auch von allen anderen zusammenklappbaren Koffergeräten, etwa gemäß der DE-AS 27 37 254 oder dem DE-GM 76 33 550. Ferner ist hervorzuheben, daß, durch Befestigung des einen Bildschirms am Oberteil und des anderen Bildschirms am Unterteil, nicht, wie bei dem DE-GM 77 09 639, eine Verbreiterung der Bildschirmfläche, sondern eine Vergrößerung in vertikaler Richtung, also höhenmäßig, erfolgt. Zusammengefaßt kann man also die Besonderheit der Erfindung dadurch kennzeichnen, daß <u>zwei</u> <u>Betrachtungszustände</u> gegeben sind, die verschieden große Teile der insgesamt möglichen Bildschirmfläche nutzen.

Die Ansprüche 2 bis 4 kennzeichnen vorteilhafte Weiterbildungen der Erfindung.

Der Anspruch 5 beschreibt zur Lösung der genannten Aufgabe und daher auch einheitlich, eine andere Ausführung, nämlich mittels einer biegsamen Folie. Wesentlich ist dabei die Verwendung einer biegsamen Folie, die in den verschiedenen Positionen von einem der Teile von Ober- und Unterteil teilweise aufgenommen wird. Diese Ausführungsform ermöglicht eine kontinuierliche Veränderung der Projektionsfläche. Sie ist besonders geeignet, den jeweils betrachteten Kartenausschnitt an die Erfordernisse
der Strecke oder die Betrachtungsgewohnheiten anzupassen.


Die einsehbare Fläche ist dabei stufenlos vorzugsweise
veränderbar. Die Straffung kann durch eine Rückzugsvorrichtung erfolgen. Ein Ende der Bildschirmfläche aus
biegsamem Material ist dabei mit der Rückzugsvorrichtung
verbunden. Die Rückzugsvorrichtung kann am unteren Teil
des Gehäuses angeordnet sein. Das andere Ende der Bildschirmfläche ist dabei an der Abdeckhaube fest befestigt.
Bei der aufwärtsgerichteten Schwenkbewegung der Abdeckhaube
wird der Bildschirm aus der Rückzugsvorrichtung ausgezogen
und erstreckt sich von der Unterkante des unteren Teils
bis zur Oberkante der Abdeckhaube. Die Anordnung der
Rückzugsvorrichtung kann auch an der Abdeckhaube erfolgen,
wobei das andere Ende der Bildschirmfläche dann mit dem
unteren Teil des Gehäuses fest verbunden ist.


Die Rückzugsvorrichtung kann aus einem Rollo bestehen,
auf das der biegsame Bildschirm besonders platzsparend
auf- bzw. abwickelbar ist. Die Rückzugsvorrichtung kann
auch aus einer Federvorrichtung und einem Aufnahmebereich
für den Bildschirm, in den dieser ein- und ausziehbar ist,
bestehen. Je nach Anordnung der Rückholvorrichtung besteht
der Aufnahmebereich aus einem Unterboden im unteren Teil
bzw. einem Deckelboden im Deckelteil der Abdeckhaube. Der eingezogene Bereich des Bildschirms ist vor Verschmutzung und Beschädigung geschützt.

Man kann aber auch auf eine Rückzugsvorrichtung verzichten, z.B. wenn die biegsame Folie steif genug ist, daß sie sich beim Herabschwenken des Oberteils von selbst mit dem Teil, der nicht einzusehen ist, in den Oberteil hineinschiebt. Dies wird dann allein durch die Führung der Folie bewirkt. Man kann auch eine Folie; deren Eigensteifigkeit dazu nicht ausreicht, durch entsprechende Leisten an den Seiten so verstärken, daß sie bei Herunterschwenken des Oberteils in diesem dadurch aufgenommen wird, daß sie sich in diesen einschiebt.

Bei einer Weiterentwicklung führt dies dazu, daß die aufgerollte oder eingezogene oder eingeschobene Bildschirmfläche in zusammengeklapptem Zustand des Lesegerätes vollständig dem Einblick entzogen ist und somit vor Beschädigung bzw. Verschmutzung gesichert ist. Das vollständige Zusammenklappen ist dabei mit einer klappbaren Anordnung der Optikvorrichtung, insbesondere der Spiegelvorrichtung verbunden. Solche Optikvorrichtungen sind z.B. aus zusammendrückbaren Operngläsern, zusammenklappbaren Sofortbildkameras und dgl. bekannt. Derartig ausgebildete Lesegeräte weisen im nicht-benutzten Zustand äußerst geringe Höhenmaße auf und können platzsparend im Fahrzeug untergebracht werden.

Zusätzlich ist das auf einen vergrößerbaren Bildschirm projezierte Bild durch bekannte Mittel wie Wechselobjektive, vorklappbare Panoramaspiegel oder durch ein in Richtung des Betrachters ausziehbare Gehäuse oder dgl. vergrößerbar. Dadurch kann bei Bedarf ein detailliertes Studium der Landkarten durchgeführt werden.

Besonders vorteilhaft kann eine Regulierung der Intensität des auf die vergrößerbare Bildschirmfläche projezierten Lichtes durch in den Strahlengang einbringbare Spiegel verschiedener Wölbungsradien (konvex, konkav oder plan) erreicht werden.

Um auch bei Tageslicht ein kontrastreiches Bild zu ermöglichen, weisen das Gehäuse und die die Bildschirmflächen umrandeten Bauteile eine dunkle Farbe (z.B. schwarz) auf.

Eine Haltevorrichtung für die Informationsträger ist bekannterweise verschiebbar in den Strahlengang der Optikvorrichtung einbringbar. Die Informationsträger bestehen aus Mikroplanfilmen im gebräuchlichen Format der Mikrofichekarten. Durch geeignetes Zusammenfügen mehrerer solcher Karten, können, insbesondere bei Landkarten, große Bereiche eingesehen werden, wobei die Feldeinteilung nach dem allgemein üblichen UTM-Gitter erfolgen kann. Die Mikrofichekarten können selbstverständlich beliebige weitere Informationen beinhalten, wie z.B. Hotel- und Restaurant-

- 9 -                                    0192026

verzeichnisse oder dgl.


Die Anbringung des Lesegerätes am Armaturenbrett,
bzw. zwischen den Vordersitzen, kann starr, dreh- oder
verstellbar erfolgen. Das Gerät kann auch abnehmbar
befestigt werden und an beliebigem Ort als Lesegerät
benutzt werden.


Allgemein gilt noch: Bei der Erfindung hat der Fahrer -
ohne den Maßstab des projezierten Bildes verändern zu
müssen - stets eine ausreichende Einsichtsmöglichkeit.
Er kann sowohl bei Übersichtskarten als auch bei Detailkarten zur Orientierung genügend Landschaftspunkte erkennen. So kann er z.B. bei Fahrten auf Autobahnen
bei vergrößertem Bildschirm einen großen Landschaftsausschnitt deutlich erkennbar projezieren, der einer Strecke
entspricht, die zwischen den üblichen Pausen nach zwei
Stunden Fahrtzeit zurückgelegt wird. Zur Orientierung
kann der Fahrer dann bei Bedarf die vergrößerte Bildschirmfläche einsehen und sich die notwendigen Informationen
holen und anschließend die Bildschirmfläche wieder verkleinern.


Bei Fahrten in Städten kann z.B. die Innenstadt auf den nicht
vergrößerten Bildschirm projeziert werden. Bei Verlassen
des Kernstadtbereiches in einer bestimmten Richtung kann,
ohne daß der Maßstab verändert wird, durch Vergrößern des Bildschirms eine wesentlich größere Stadtfläche
eingesehen werden, ohne daß zahlreiche evtl. den Verkehr
behindernde Stops zum Verschieben der Landkarte oder
der Optik eingelegt werden müssen.

Hat sich der Benutzer bei vergrößerter Bildschirmfläche
orientiert und z.B. seinen Zielpunkt aufgefunden, reicht
das auf die verkleinerte Bildschirmfläche projezierte
Bild zum weiteren Zurechtfinden aus. Der Benutzer kann sich
dann voll auf den geringeren Ausschnitt der Landkarte
konzentrieren, ohne sich wie bei herkömmlichen Geräten
dabei an einen anderen Maßstab gewöhnen zu müssen.

Da diese Vorgänge mit nur einer Hand auch während des
Fahrens ohne Beeinträchtigung der Fahrsicherheit durchgeführt werden können, steht die vergrößerte Bildschirmfläche
z.B. im Stadtverkehr während der gesamten Wartezeiten an
Ampeln zur Einsicht zur Verfügung und ermöglicht eine
rasche Orientierung.

Die Erfindung wird anhand der in der Zeichnung aufgezeigten
ausgewählten Ausführungsbeispiele näher beschrieben und erläutert. Es zeigt:

Figur 1          eine Frontansicht eines erfindungsgemäßen
                 Lesegerätes mit vergrößerter Bildschirmfläche;

Figur 2       einen Schnitt entlang der Linie II-II in Fig. 1;

Figur 3       den Schnitt wie in Fig. 2, jedoch in zugeklapptem Zustand des Lesegerätes;

Figur 4       eine Draufsicht auf das Ausführungsbeispiel von Fig. 1 mit abgenommener Abdeckhaube und eingeschobenem Informationsträger;

Figur 5       schematisch eine Draufsicht auf ein weiteres Ausführungsbeispiel mit seitlicher Anordnung der Lichtquelle;

Figur 6       schematisch eine Frontansicht des Ausführungsbeispieles von Fig. 5;

Figur 7       eine Spiegelvorrichtung zur Regulierung der Helligkeit des projezierten Bildes in einer ersten Stellung;

Figur 8       die Spiegelvorrichtung von Fig. 7 in einer zweiten Stellung.

Figur 9 und 10    schematisch eine Seitenansicht von
Ausführungsbeispielen mit auf ein
Rollo aufwickelbarer Bildschirmfläche,
und

Figur 11 und 12    schematisch eine Seitenansicht von
Ausführungsbeispielen mit durch
Federkraft in einen Aufnahmebereich
rückführbarer Bildschirmfläche.

Das in Fig. 1 bis 3 aufgezeigte Lesegerät weist ein Gehäuse auf, das aus einem unteren Teil 11 und einer
bewegbaren Abdeckhaube 12 besteht. Die Abdeckhaube 12
weist einen Deckelteil 13 und zwei nach unten abgewinkelte
Seitenteile 14 auf. Die Abdeckhaube 12 ist mit einem
hinteren oberen Ende 16 der Seitenteile 14 mit einem
oberen hinteren Ende 17 des unteren Teils 11 des Gehäuses
10 verbunden. Die Verbindung ist derart, daß die Abdeckhaube 12 um eine Achse 15 nach oben schwenkbar ist. Die
Verbindung zwischen Abdeckhaube 12 und unterer Teil 11
an den Enden 16 und 17 besteht in einer Verschraubung.
Die Seitenteile 14 der Abdeckhaube 12 verlaufen parallel
zu Außenflächen 18 von Seitenwänden 19 des unteren
Teils 11 des Gehäuses 10. Die Seitenteile 14 der Abdeckhaube und die Seitenwände 19 weisen etwa dasselbe Höhennaß auf.

Im unteren Teil 11 des· Gehäuses 10 ist ferner ein
erster Bildschirm 20 angeordnet. Der erste Bildschirm 20 erstreckt sich von seiner Seitenwand 19
des unteren Teils 11 bis zu einem Gehäuse 21, das
Teile einer Objektivvorrichtung 22 die nachfolgend
noch näher erläutert wird, enthält. Der erste Bildschirm 20 ist um einen Abstand 23 von einer Vorderkante 24 des unteren Teiles 11 angeordnet. Er ist
dabei in Richtung des Innenraumes des unteren Teils
11 geneigt. Der erste Bildschirm 20 wird durch
Führungsteile 25 und 26, die an der Seitenwand 19
des unteren Teiles 11 befestigt sind, sowie durch
diesen entsprechende Teile am Gehäuse 21 gehalten.
In die durch die Führungsteile umgrenzten Nuten
27, kann der erste Bildschirm 20 ein- bzw.
ausgeschoben werden. Der erst Bildschirm 20
weist eine solche höhe auf, daß eine Oberkante 28
einen Abstand 29 von einer Oberkante 30 der Seitenwand 19 des unteren Teiles 11 besitzt.
Wie aus Fig. 1 zu entnehmen, weist der erste Bildschirm 20 eine rechteckige Kontur auf. In dem in
Fig. 1 aufgezeigten Ausführungsbeispiel beträgt die
Breite ca. 14 cm und die Höhe etwa 7 cm. Die Grenze
der wählbaren Maße liegt vorzugsweise bei einer Fläche
von 20 x 10 cm.

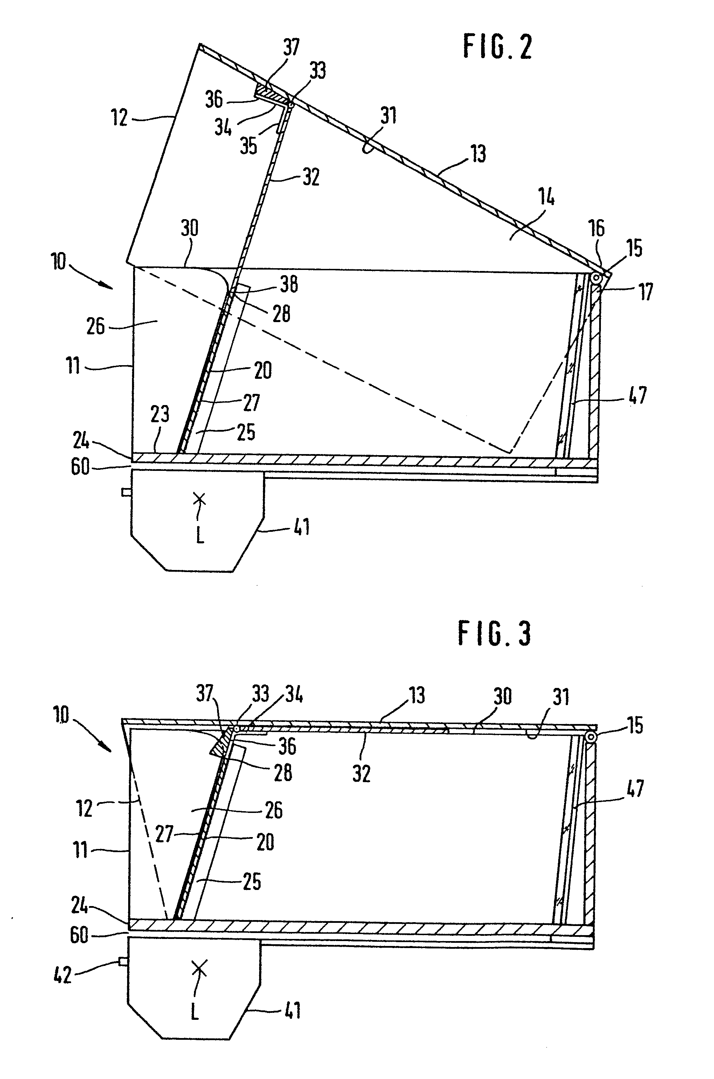

An einer dem Innenraum des Lesegerätes zugewandten
Fläche 31 des Deckelteiles 13 der Abdeckhaube 12
ist ein zweiter Bildschirm 32 um eine Achse 33 klappbar angebracht. Die Achse 33 verläuft parallel zur
Schwenkachse 15 der Abdeckhaube und liegt am Schnittpunkt einer gedachten Verlängerungslinie der Nut 27
mit dem Deckelteil 13 (s. Fig. 2). Der zweite Bildschirm 32 weist an dem mit der Achse 33 verbundenen
Ende ein Winkelstück 34 auf. Das Winkelstück 34 ist
durch einen ersten Schenkel 35 mit dem zweiten Bildschirm 32 verbunden. Ein zweiter Schenkel 36 des
Winkelstückes 34 ist mit einem Anschlagstück 37 versehen. Wie aus Fig.1 und 2 zu entnehmen, ist die Ausklappbewegung des zweiten Bildschirmes 32 bei angehobener Abdeckhaube 12 durch das Anschlagstück 37 begrenzt. Das Anschlagstück 37 ist dabei so ausgebildet, daß, wenn es an der Innenfläche 31 des
Deckelteiles 13 zum Anliegen kommt, der zweite
Bildschirm 32 mit seiner Unterkante 38 auf der
Oberkante 28 des ersten Bildschirmes 20 zum Stehen
kommt. Der zweite Bildschirm 32 kommt dabei
in dem Bereich der Nut 27 zu liegen, der nicht
durch den ersten Bildschirm 20 ausgefüllt ist.
In der in Fig. 1 und 2 aufgezeigten Stellung
bilden die beiden Bildschirme 20,32 eine vergrößerte durchgehende ebene Bildschirmfläche.
Der zweite Bildschirm 32 weist ebenfalls eine
rechteckige Kontur auf mit einer Höhe von ca.
7 cm und einer Breite von ca. 14 cm, so daß insgesamt eine ungefähr quadratische Bildschirmfläche mit 14 cm Kantenlänge vorhanden ist. Der
zweite Bildschirm 32 weist, wie aus Fig. 1 zu
entnehmen, seitliche Blendenteile 39 und 40
auf. Das Blendenteil 39 ist dabei so ausgebildet, daß es im aufgeklappten Zustand der Abdeckhaube
12 die Fläche überhalb des Gehäuses 21 abdeckt.
Das Blendenteil 40 deckt den Raum zwischen zweitem Bildschirm 32 und Seitenteil 14 der Abdeckhaube ab.

In der in Fig. 3 aufgezeigten Stellung, also bei abgesenkter Abdeckhaube 12, verlaufen der zweite Bildschirm 32 und die mit ihm verbundenen Blendenteile 39 und 40 parallel zur Innenfläche 31 des Deckenteils 13 der Abdeckhaube 12, und liegen auf der Oberkante 30 der Seitenwände 19 des unteren Teiles 11 des Gehäuses 10 auf. Der Schenkel 30 des Winkelstücks 34 kommt dabei in der Nut 27, bzw. in der dieser entsprechenden Nut am Gehäuse 21 zu Liegen.

Sämtliche Flächen des Gehäuses 10 sind in schwarzer Farbe gehalten, um einen Kontrast zur beleuchteten Bildschirmfläche im Betrieb zu schaffen.

Durch die Anordnung des Bildschirms im Abstand 23 zur Vorderkante 24 ist die Bildschirmfläche in den Innenraum des Gehäuses eingerückt und trägt ebenfalls zur besseren Erkennbarkeit des auf sie projezierten Bildes bei.

Geht man in der in Fig. 3 aufgezeigten Betriebsstellung aus, so erfolgt der Übergang zu der in Fig. 1 und 2 aufgezeigten Stellung mit verdoppelter Bildschirmfläche wie folgt:

Die Abdeckhaube 12 wird angehoben. Der zweite
Bildschirm 32 klappt aufgrund der Schwerkraft nach
unten und wird durch Anpressen des mit dem Anschlagsstück 37 versehenen zweiten Schenkels 36
an die Innenfläche 31 des Deckelteils 13 in die
maximale Ausklappstellung gebracht. Das Anpressen
des Winkelstücks 34 kann z.B. durch den Daumen der
Hand geschehen, die die Abdeckhaube 12 anhebt. Durch
Absenken der Abdeckhaube 12 wird der zweite Bildschirm 32 so weit in die durch die Führungsteile
gebildete Nut 27 eingeführt, bis er mit seiner
Unterkante 38 auf der Oberkante 28 des ersten Bildschirms 20 zum Stehen kommt. Die Vergrößerung der
Bildschirmfläche kann also durch eine einfache Handbewegung mit nur einer Hand ausgeführt werden,
ohne daß z.B. ein Kraftfahrer, der dieses Lesegerät
bedient, seinen Blick auf dieses dabei richten muß.
Das bedeutet, daß die Vergrößerung z.B. noch während
des Fahrens durchgeführt werden kann und dann, z.B.
im Stadtverkehr an einer Ampel während der Wartezeit
das Lesegerät eingesehen werden kann.

- 17 -                           0192026

Der umgekehrte Vorgang, nämlich die Verkleinerung der Bildschirmfläche kann ebenfalls durch eine einfache Bewegung, ohne daß der Blick auf das Lesegerät gerichtet sein muß, durchgeführt werden.

Dabei wird die Abdeckhaube so weit angehoben, daß der zweite Bildschirm 32 aus der Nut 27 herausgezogen wird. Bei geneigter Anordnung des Lesegerätes, d.h. vom Betrachter aus gesehen mit nach hinten geneigter Oberkante 30 des unteren Teils 11 muß nur noch abgesenkt werden, wobei bei Auftreffen der Blendenteile 39, 40 auf die Oberkante 30 des unteren Teiles 11 des Gehäuses der Bildschirm 32 bei der Absenkbewegung in Richtung Innenraum abgeklappt wird, bis er in der in Fig. 3 aufgezeigten Endstellung zum Liegen kommt. Bei ebener Anordnung des Lesegerätes wird in der ersten Absenkphase der Abdeckhaube 12 der zweite Bildschirm 32 z.B. durch einen Finger nach innen gedrückt.

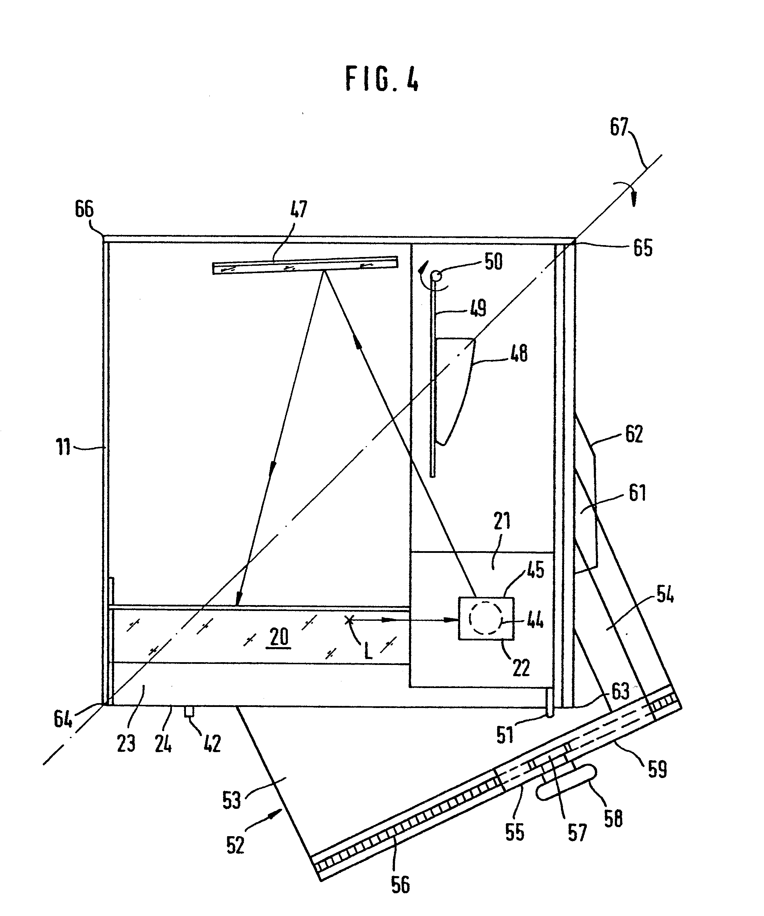

Der untere Teil 11 des Gehäuses 10 weist ein Bodenteil 41 auf, in dem eine Lichtquelle L angeordnet ist. Im Bodenteil 41 ist ein Schalter 42 zur Betätigung der Lichtquelle angeordnet. Der Strahlengang von der Lichtquelle L zu den Bildschirmen 20 bzw. 32 ist in den Fig. 1 und 4 schematisch durch einen Pfeil angedeutet. Der von der Lichtquelle L erzeugte Lichtstrahl trifft auf einen ersten Umlenkspiegel 43 (siehe Fig. 1) und wird in das Gehäuse 21, das die Objektivvorrichtung 22 enthält, gelenkt. Die Objektivvorrichtung 22 besteht aus einer höhenverstellbaren Linse 44 und einem zweiten Umlenkspiegel 45 (Fig. 4). Die Linse 44 ist koaxial in einem Stellrad 46 angeordnet und kann durch einfaches Drehen des Stellrades 46 zur Scharfstellung in der Höhe bewegt werden. Ein zweiter Umlenkspiegel 45 (Fig. 4) ist im Strahlengang nach der Linse 44 derart angeordnet, daß der Strahl auf einen Reflektionsspiegel 47, der im hinteren Teil 11 des Gehäuses 10 fest angeordnet ist trifft. Der ortsfeste Reflektionsspiegel 47 ist dabei so angeordnet, daß das vom zweite Spiegel 45 reflektierte Bild gerade die Bildschirmfläche im vergrößerten Zustand (Fig. 2) bedeckt. Im in Fig. 3 aufgezeigten Zustand des Lesegerätes, also mit eingeklapptem zweiten Bildschirm 32 wird ein Teil des vom ortsfesten Spiegel 47 reflektierte Licht gegen die Innenfläche 31 des Deckelteils 13 bzw. den zweiten Bildschirm 32 geworfen, ohne daß es dabei reflektiert wird und somit das auf den ersten Bildschirm 20 projezierte Bild nicht stört.

Um das Höhenmaß des Spiegels 47 zu reduzieren,
kann dieser als konvex gewölbter Spiegel ausgebildet
sein.

Zur Vergrößerung des auf den bzw. die Bildschirme
projezierten Bildes kann vor dem Reflektionsspiegel
47 ein Panoramaspiegel 48 vorgeklappt werden. Der
Panoramaspiegel 48 ist an einer Halterung 49 befestigt, die um eine senkrechte Achse 50 schwenkbar ist. Die Schwenkbewegung wird durch einen aus
dem Gehäuse 21 hervorragenden Hebel 51, der mit der
Achse 50 durch einen hier nicht aufgezeigten Hebelmechanismus
verbunden ist, ausgelöst. Die Halterung 49 des
Panoramaspiegels 48 weist ungefähr dasselbe Flächenmaß wie der Reflektionsspiegel 47 auf und deckt
diesen somit bei vorgeklappten Panoramaspiegel ab.

Die Informationsträger, die z.B. aus mikroverfilmten
Landkarten bestehen, werden von einer Haltevorrichtung
52 aufgenommen (s. Fig. 4). Die Haltevorrichtung 52
besteht aus einer durchsichtigen Trägerplatte 53 und
einer flächengleichen Abdeckung, zwischen die die
Informationsträger eingeschoben werden. Die Haltevorrichtung 52 weist außerdem eine Führungsschiene 54
und eine Verstellvorrichtung 55 auf. Die Verstellvorrichtung 55 besteht aus einer Zahnschiene 56 **0192026**
und einem mit einem Zahnrad 57 fest verbundenen
Drehknopf 58. Die Führungsschiene 54 ist drehbar
mit einem Gehäuse 59 der Verstellvorrichtung 55
verbunden. Die Haltevorrichtung 52 wird in einen
Einführungsschlitz 60 überhalb des Bodenteils 41 des
unteren Teils 11 des Gehäuses 10 eingeschoben. Die
Führungsschiene 54 wird dabei von einer Führungsnut 61 einer seitlichen Führungsplatte 62 aufgenommen. Die Führungsplatte 62 ragt seitlich aus
dem Gehäuse heraus und erleichtert das Einführen
der Haltevorrichtung in das Lesegerät. Durch die
Führungsplatte 62 wird das Lesegerät über eine
vordere rechte Ecke 63 in das Lesegerät eingeschoben.
Der untere Teil 11 des Gehäuses 10 ist mit dem
Bodenteil 41 durch eine hier nicht aufgezeigte Verschraubung mit einer vorderen linken Ecke 64 und
einer hinteren rechten Ecke 65 fest verbunden. Die
Befestigung zwischen dem Bodenteil 41 und dem unteren
Teil 11 an einer hinteren linken Ecke 66 erfolgt durch
eine federnde Verbindung. Der untere Teil 11 des Gehäuses ist somit geringfügig um eine Achse 67, die durch die
Eckpunkte 64 und 65 verläuft,aufgrund der fehlenden
Eckverbindung 66 schwenkbar. Die federnde Eckverbindung 66 ist dabei so eingestellt,
daß die Haltevorrichtung 52 gegen die Kraft dieser Feder in den Schlitz 60 einschiebbar ist. Durch die Führungsschiene 54 einerseits und die geringfügige Vorspannung der den Schlitz 60 umgrenzenden Gehäuseteile, wird die Haltevorrichtung 52 fest im Gehäuse gehalten. Durch diese feste Haltung erfolgt kein "Wandern" der Haltevorrichtung während der Autofahrt, so daß einerseits eine ortsfeste Fixierung der Haltevorrichtung erreicht wird, andererseits diese jedoch auch einfach verschoben werden kann. Die den Innenraum des Schlitzes 60 umgrenzenden Flächen können mit elastischem Material, z.B. Moosgummi, Schaumstoff, Samt usw. ausgeschlagen sein. Der Schlitz 60 ist auch bei nicht eingeschobener Haltevorrichtung 52 vor Verschmutzung gesichert.

In dem in Fig. 1 bis 4 aufgezeigten Ausführungsbeispiel befindet sich die Lichtquelle L in einem Bodenteil 41 des unteren Teils 11 des Gehäuses 10.

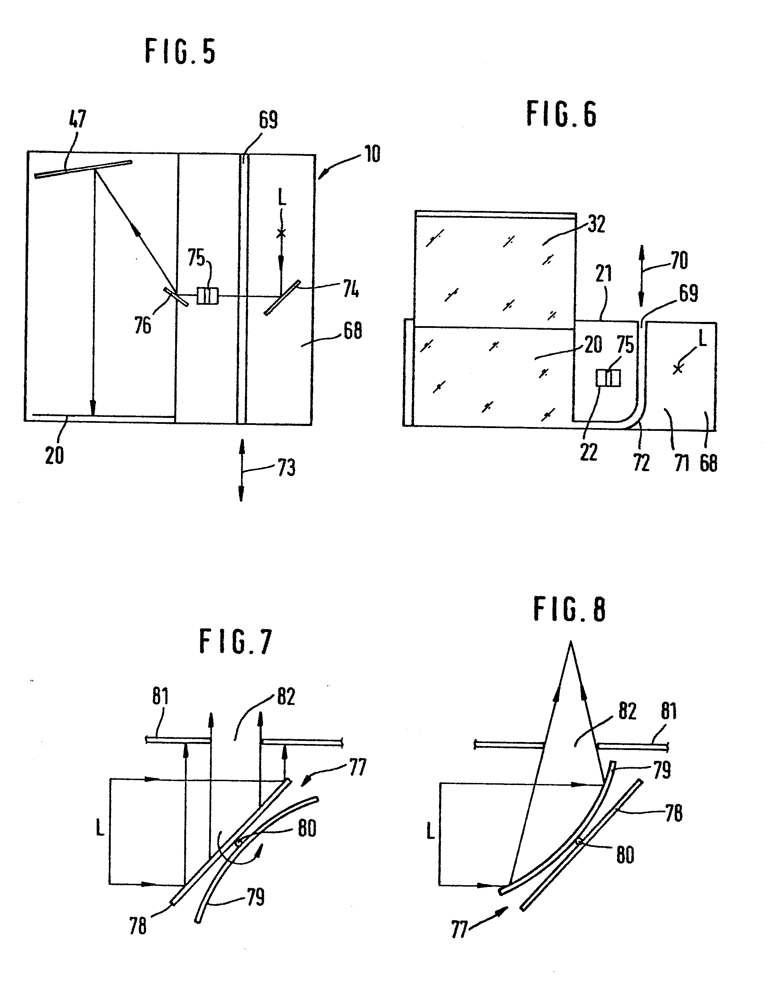

In dem in Fig. 5 und 6 aufgeführten Ausführungsbeispiel ist die Lichtquelle L in einem Seitenteil 68 angeordnet. Zwischen dem Seitenteil 68 und dem Gehäuse 21, das die Objektivvorrichtung 22 enthält ist ein Schlitz 69 vorgesehen, in den eine hier nicht aufgezeigte Haltevorrichtung für die mikroverfilmten Informationsträger eingeschoben werden können. Die Haltevorrichtung kann längs eines Pfeiles 70 in der Höhe verschoben werden. Der senkrecht verlaufende Schlitz 69 geht in einem Bodenbereich 71 des Lesegerätes in einer sanften Krümmung 72 in die Waagerechte über. Die Haltevorrichtung ist aus flexiblem Material gehalten, so daß bei tief eingeschobener Vorrichtung diese sich der Krümmung 72 des Schlitzes 69 anpassen kann. Diese biegsame Ausbildung ermöglicht die Ausmaße des Gehäuses 21 und des Seitenteils 68 gering zu halten. Wie in Fig. 5 aufgezeigt verläuft der Schlitz 69 über die gesamte Länge des Gehäuses 10, so daß die Haltevorrichtung längs eines Pfeiles 73 hin- und hergeschoben werden kann. Das von der Lichtquelle L kommende Licht wird von einem ersten Umlegspiegel 74 im Seitenteil 68 in Richtung des Schlitzes 69 abgelenkt und trifft nach diesem auf eine Linse 75, zur Scharfeinstellung des Bildes. Die Linse 75 ist dabei, hier nicht näher aufgezeigt, ebenso wie die Linse 44 des zuvor aufgezeigten Ausführungsbeispiels in einem Stellrad angeordnet. Die Linse 75 ist durch das Stellrad 4 in der Horizontalen verstellbar. Der Lichtstrahl trifft nach Verlassen der Linse 45 auf einen zweiten Umlenkspiegel 76 und trifft dann wie bei Fig. 4 beschrieben, auf den Reflektionsspiegel 47.

Für die Verwendung eines erfindungsgemäßen Lesegerätes ist es von Vorteil, die Helligkeit des Bildes zu
regulieren damit z.B. bei Nacht ein zu helles Bild
das als störend empfunden wird abgedunkelt werden
kann. Eine gebräuchliche Methode dieser Regulierung
ist die Veränderung der Spannung an der Leuchte
(Lichtquelle L). Bei einer Hallogenkaltspiegelleuchte
wie sie in den erfindungsgemäßen Lesegeräten verwendet
wird kann durch eine Verminderung der Spannung die
Lebensdauer jedoch stark beeinträchtigt werden. Die
Regulierung der Helligkeit des projezierten Bildes
der erfindungsgemäßen Lesegeräten wird durch eine
Spiegelvorrichtung 77 erreicht. Die Spiegelvorrichtung
77 weist einen ersten planen Spiegel 78 und einen zweiten
gewölbten Spiegel 79 auf, die längs einer Achse 80
miteinander verbunden sind. Die Spiegel 78, 79 können
um ihre Verbindungsachse 80 gedreht werden und die
in Fig. 7 und 8 aufgezeigten Stellungen einnehmen. Das
von der Spiegelvorrichtung 77 reflektierte Licht trifft
auf eine Blende 81 die mit einer Öffnung 82 konstanterweise versehen ist. In der in Fig. 7 aufgezeigten Stellung
trifft das von der Lichtquelle L kommende Licht auf den
planen Spiegel 78 und wird in Richtung der Blende 81
reflektiert. Dabei kann nur ein gewisser Anteil des
reflektieren Lichtes durch die Öffnung 82 austreten.
Ein gewisser Anteil des von der Lichtquelle L kommenden Lichtes wird von der Blende 81 absorbiert. In der in
Fig. 8 aufgezeigten Stellung wird das gesamte von der
Lichtquelle L kommende Licht durch den gewölbten Spiegel 79 durch die Öffnung 82 der Blende 81 reflektiert,
so daß die hindurchtretende Lichtstärke wesentlich höher
ist. Durch die in Fig. 7 und 8 aufgezeigten Stellungen
können zwei verschiedene Lichtstärken eingestellt werden.
Durch Kombination weiterer Spiegel können, hier nicht aufgezeigt, weitere Helligkeitsabstufungen erreicht werden.
Man kann eine Helligkeitsabstufung auch durch schwenkbare
Anordnung von nur eines Spiegels erreichen.

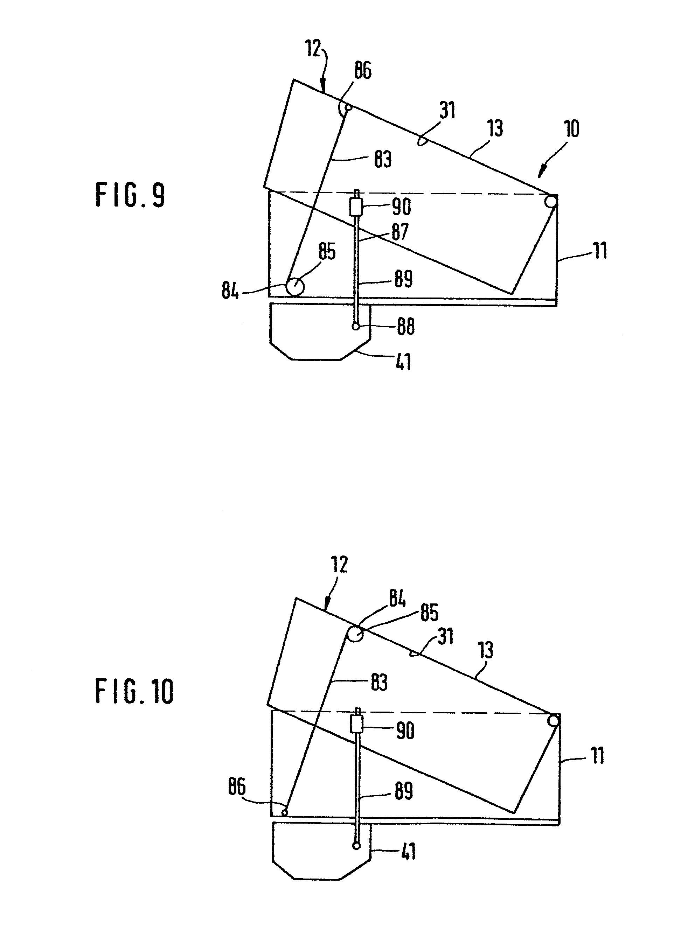

Das in Fig. 9 aufgezeigte Ausführungsbeispiel weist eine
Bildschirmfläche 83 aus biegsamem Material auf. Der Bildschirm ist an einem Ende mit einer Rückzugsvorrichtung
84 verbunden. Die Rückzugsvorrichtung 84 besteht aus einem
Rollo 85, daß im unteren Teil 11 des Gehäuses 10 angeordnet ist. Das andere Ende 86 des Bildschirms 83 ist
an der Innenfläche 31 des Deckelteils 13 der Abdeckhaube
12 befestigt. Die in Fig. 9 aufgezeigte Stellung entspricht der in Fig. 2 aufgezeigten Stellung mit ausklappbaren Bildschirmen 20 und 32, wobei die Fläche des Bildschirms 83 etwa der Fläche der beiden Bildschirme 20 und
32 des in Fig. 2 aufgezeigten Ausführungsbeispiels entspricht. In der in Fig. 9 aufgezeigten Stellung befindet
sich die Abdeckhaube 13 in ihrer maximal aufklappbaren
Stellung. Die Abdeckhaube 13 ist über eine Führungsvorrichtung 87 mit dem Bodenteil 41 verbunden. Die Führungsvorrichtung weist eine um eine Achse 88 schwenkbare
Führungsstange 89 auf, die am Deckelteil 13 durch ein
Klemmteil 90 hindurchreicht. Die Verwendung zwischen
Klemmteil 90 und Führungsstange 89 ist so gehalten, daß
die Abdeckhaube 13 in jeder beliebigen Stellung zwischen
zugeklappter und maximal aufklappbarer einstellbar ist.

Dazu ist die klemmende Verbindung zwischen Stange 89 und
Teil 90 geringfügig stärker als die Kraft der Rückzugsvorrichtung 84. Bei Absenken der Abdeckhaube 12 aus der
in Fig. 9 aufgezeigten Stellung wird mit einer Hand auf
die Haube gedrückt und diese dabei abgesenkt. Durch die
Federkraft der Rückzugsvorrichtung 84 wird der Bildschirm
auf das Rollo 85 aufgerollt.

Im in Fig. 10 aufgezeigten Ausführungsbeispiel ist die
Rückzugsvorrichtung 84 an der Innenfläche 31 des Deckelteils 13 der Abdeckhaube 12 angeordnet. Der Bildschirm
83 ist dabei mit einem Ende mit dem Rollo 85 verbunden
während das andere Ende 86 mit dem Boden des unteren Teils
11 verbunden ist. Bei der aufwärts gerichteten Bewegung
wird dabei der Bildschirm 83 aus biegsamen Material vom
am Deckelteil angeordneten Rollo ausgezogen.

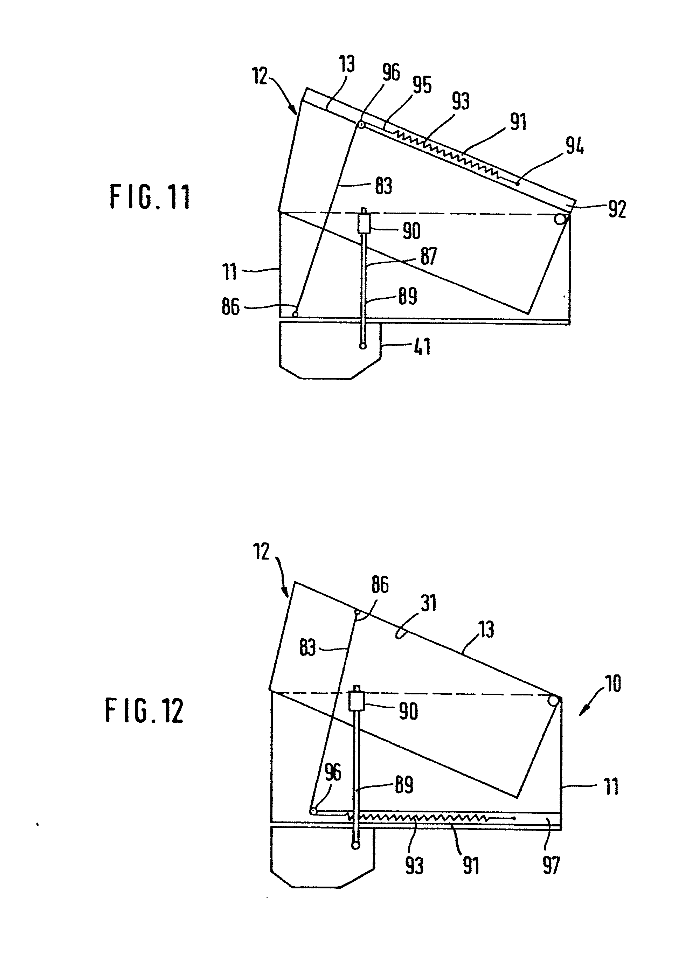

Bei dem in Fig. 11 aufgezeigten Ausführungsbeispiel
wird der Bildschirm 83 aus biegsamem Material von
einer Rückzugsvorrichtung 91 in einen Deckelboden 92.
Der Deckelboden 92 ist auf dem Deckelteil 13 der
Abdeckhaube 12 angeordnet. Die Rückzugsvorrichtung
91 besteht aus einer Feder 93 die an einem Ende 94
mit dem Deckelboden 92 und am anderen Ende 95 mit
dem Bildschirm 83 verbunden ist. Der Bildschirm 83
ist mit seinem anderen Ende 86 mit dem Boden des
unteren Teils 11 des Gehäuses verbunden. Der Bildschirm
83 wird von der Feder 93 über eine Umlenkwalze 96
bei der Absenkbewegung der Abdeckhaube 12 in den
Deckelboden 92 gezogen. Die Abdeckhaube 12 kann ebenso wie in den Figuren 9 und 10 aufgezeigten Ausführungsbeispielen mittels der Führungsvorrichtung 87 in
jeder gewünschten Stellung zwischen dem geschlossenem
und maximal aufgeklapptem Zustand gehalten werden.
In dem in Fig. 12 aufgezeigten Ausführungsbeispiel
ist die Rückzugsvorrichtung 91 in einem Unterboden
97 des unteren Teils 11 des Gehäuses 10 angeordnet.
Die Rückzugsvorrichtung 91 besteht wie die in Fig. 11
aufgezeigte Vorrichtung aus einer Feder 93, die mit
einem Ende des Bildschirms 83 verbunden ist. Das andere
Ende 86 des Bildschirms ist an der Innenfläche 31 des Deckelteils 13 der Abdeckhaube 12 befestigt. Der Bildschirm 13 wird durch die Feder 93 bei der Absenkbewegung der Abdeckhaube 12 aus der in Fig. 12 aufgezeigten Stellung über die Walze 96 in den Unterboden 97 eingezogen.

UWE DREISS
Dr. Jur., Dipl.-Ing., M. Sc.
HEINZ HOSENTHIEN
Dr.-Ing., Dipl.-Ing.
JÖRN FUHLENDORF
Dipl.-Ing.

beim Europäischen Patentamt zugelassene Vertreter
European Patent Attorneys

JF (07 11) 24 57 34/44
TG IDEAPAT
TX 04 92 026
P fur Besucher

DREISS, HOSENTHIEN & FUHLENDORF, D-7000 STUTTGART 1

Anmelderin:

Brigitte Bengel

Haldenstraße 53

7148 Remseck 3

| Amtl. Akt. Z. Off. Ser. No. | Ihr Zeichen Your Ref. | Unser Zeichen Our Ref. | Datum Date |
|---|---|---|---|
| | | 0414 006 . | 19.12.1985 D/W |

Titel: Lesegerät für mikroverfilmte Informationsträger

## Patentansprüche

1. Lesegerät für mikroverfilmte Informationsträger, insbesondere zur Anordnung am Armaturenbrett eines Kraftfahrzeuges, mit einer Führung für den Informationsträger, mit einem aus einem Unterteil und einem daran schwenkbar angelenktem Oberteil bestehenden Gehäuse und einem mehrteiligen Bildschirm, der bei hochgeschwenktem Vorderteil eine von einer Projektionseinrichtung insgesamt erfaßte und betrachtbare Projektionsfläche bildet, dadurch gekennzeichnet, daß bei herabgeschwenktem Oberteil ein Teil (20) des Bildschirms (20, 32) als von der Projektionseinrichtung (2, 43, 22, 47) unverändert erfaßte betrachtbare Projektionsfläche verbleibt.

Postscheckkonto Stuttgart 507 71-705 (BLZ 600 100 70) Dresdner Bank Stuttgart 1 919 854 (BLZ 600 800 00)

2. Lesegerät nach Anspruch 1, dadurch gekennzeichnet, daß der Bildschirm (20, 32) zweiteilig ausgebildet ist und bei hochgeschwenktem Oberteil (12) die Unterkante (38) des am Oberteil angelenkten zweiten Bildschirms (32) auf der Unterkante (28) des am Unterteil angeordneten ersten Bildschirms (20) aufsitzt.

3. Lesegerät nach Anspruch 2, dadurch gekennzeichnet, daß die Flächen der beiden Bildschirme sich wie 1:1 bis 2:1 verhalten.

4. Lesegerät nach Anspruch 1 oder einem der folgenden, dadurch gekennzeichnet, daß die Verstellbarkeit von Oberteil (12) gegenüber Unterteil (11) durch einen Anschlag (37) begrenzt wird.

5. Lesegerät für mikroverfilmte Informationsträger, insbesondere zur Anordnung am Armaturenbrett eines Kraftfahrzeuges, mit einer Führung für den Informationsträger, mit einem aus einem Unterteil und einem daran schwenkbar angelenkten Oberteil bestehenden Gehäuse und einem mehrteiligen Bildschirm, der eine von einer Projektionseinrichtung insgesamt erfaßte und betrachtbare Projektionsfläche bildet, dadurch gekennzeichnet, daß der Bildschirm (83) aus biegsamen Material besteht, dessen eines Ende (86)

an einem Teil von Ober- bzw. Unterteil (11, 12)
befestigt und dessen anderes freies Ende (95)
am anderen Teil von Ober- bzw. Unterteil aufnehmbar
ist, und daß bei heruntergeschwenktem Oberteil (12)
der nicht in einem der Teile des Gehäuses aufgenommene Teil des aus biegsamem Materials bestehenden
Bildschirms (83) als in der Projektionseinrichtung
erfaßte betrachtbare Projektionsfläche verbleibt.

6. Lesegerät nach Anspruch 5, dadurch gekennzeichnet,
   daß der Bildschirm (83) aus biegsamem Material auf
   ein Rollo (85), das an einem Teil im Ober- und
   Unterteil (11, 12) angeordnet ist, aufwickelbar ist.

7. Lesegerät nach Anspruch 5, dadurch gekennzeichnet,
   daß der Bildschirm (83) aus biegsamem Material durch
   eine Feder (93) in einen Bereich (92, 97) an einem
   Teil von Ober- und Unterteil (11, 12) einziehbar und
   am anderen Teil von Ober- und Unterteil (11, 12) fest
   angebracht ist.

8. Lesegerät nach Anspruch 5 oder einem der folgenden,
   dadurch gekennzeichnet, daß die betrachtbare Fläche
   des Bildschirms stufenlos bis zur maximalen Größe
   veränderbar ist.

9. Lesegerät nach Anspruch 1 oder 5, dadurch gekennzeichnet, daß die Intensität des auf die veränderbare Bildschirmfläche projezierten Lichtes in an
sich bekannter Weise regelbar ist.

10. Lesegerät nach Anspruch 9, dadurch gekennzeichnet,
daß die Intensität des auf die veränderbare Bildschirmfläche projezierten Lichtes mittels einer Spiegelvorrichtung (17), die das von der Lichtquelle kommende
Licht streut bzw. konzentriert, regelbar ist.

11. Lesegerät nach Anspruch 7, dadurch gekennzeichnet,
daß die Spiegelvorrichtung (77) wahlweise in den
Strahlengang einbringbare Spiegel (78, 79) mit
verschiedenen Wölbungsradien (konvex, konkav oder
plan) aufweist.

12. Lesegerät nach Anspruch 11, dadurch gekennzeichnet,
daß die Spiegelvorrichtung (77) im Strahlengang
zwischen Lichtquelle (L) und vor Auftreffen auf
den Informationsträger angeordnet ist.

# FIG. 1

0192026

FIG.2

FIG.3

# FIG. 4

**FIG.5**

**FIG.6**

**FIG.7**

**FIG.8**

FIG.9

FIG.10

FIG.11

FIG.12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | DE-A-2 802 597 (E.M.G. GmbH)<br>* Seite 1; Anspruch 1 * | 1,5 | G 09 B 29/10<br>G 03 B 21/30 |
| A | FR-A-2 544 511 (MINOX GmbH)<br>* Zusammenfassung, Figur 1 * | 1,5 | |
| A | DE-C- 611 894 (R. HUNTER et al.)<br>* Seite 2, Zeilen 80-108; Figur 2 * | 1,5-8 | |
| A | US-A-3 810 317 (H. ROSENBAUM et al.)<br>* Spalte 1, Zeilen 30-42; Spalte 2, Zeilen 15-24; Figuren 1,4 * | 1,5,9,10 | |

| | RECHERCHIERTE SACHGEBIETE (Int Cl 4) |
|---|---|
| | G 09 B<br>G 03 B |

Der vorliegende Recherchenbericht wurde für alle Patentansprüche erstellt

| Recherchenort | Abschlußdatum der Recherche | Prüfer |
|---|---|---|
| DEN HAAG | 11-03-1986 | ODGERS M.L. |